# EUROPÄISCHE PATENTANMELDUNG

(11) **EP 0 536 449 A1**
(43) Veröffentlichungstag der Anmeldung: **14.04.1993**
(21) Anmeldenummer: 91250277.0
(22) Anmeldetag: 10.10.1991
(51) Int. Cl.: B29C 45/77

(54) **Verfahren zur one-line-Bestimmung des Umschaltwertes auf Nachdruck beim Spritzgiessen**

(71) Anmelder: AUTOMATISIERUNGS- UND KUNSTSTOFFTECHNIK GmbH CHEMNITZ, D-09120 Chemnitz (DE)
(72) Erfinder: Caspar, Dieter, Dr.-Ing., O-9006 Chemnitz (DE); Hummel, Erhard, Dipl.-Ing., O-9002 Chemnitz (DE); Schneider, Hans, Dipl.-Ing., O-9122 Adorf (DE)
(74) Vertreter: Illing, Ralf

(57) **Zusammenfassung**

Der Umschaltwert auf Nachdruck für das Spritzgießen ist für die Qualität der Werkstücke von hoher Bedeutung. Seine Ermittlung soll so erfolgen, daß Veränderungen noch im ablaufenden Spritzzyklus wirksam werden. Dabei sollen Störungen im Kompressiosaufbau im Formhohlraum vermieden werden.
Dazu wird der Umschaltwert für den Nachdruck vom Leistungsbedarf für den Werkzeugfüllvorgang nach der Zuschaltung der Spritzkraftbegrenzung abgeleitet, wobei dieser Leistungsbedarf größer ist als der bei stillstehendem kraftbelsteten Einspritzsystem, aber wesentlich kleiner ist als der Leistungsbedarf zu Beginn des Werkzeugfüllvorganges.

## Beschreibung

Die Erfindung bezieht sich auf ein Verfahren zur one-line-Bestimmung des Umschaltwertes auf Nachdruck beim Spritzgießen von Formteilen aus Kunststoff, Keramik, Metall oder ähnlichem auf Spritzgießmaschinen, bei denen für die Formfüllphase eine Spritzkraftbegrenzung vorgegeben ist. Weiterhin wird die Vorlaufgeschwindigkeit des die Formmasse in den Formhohlraum verdrängenden Kolbens so gesteuert, daß die Spritzkraftbegrenzung eingehalten wird.

Die Bestimmung des Umschaltwertes auf Nachdruck ist beim Spritzgießen für die Qualität der hergestellten Werkstücke und für die Wirtschaftlichkeit der Herstellung von erheblicher Bedeutung.

Im EP 0233548 A2 wird ein Verfahren und eine dazugehörige Einrichtung einer hydraulischen Spritzgießmaschine beschrieben, bei dem die Zeit zwischen dem Umschaltwert auf Nachdruck und dem Erreichen eines vorgewählten Druckes oder des Druckes bei Förderstromreduzierung oder die Zeit zwischen einem ersten Erreichen eines vorgewählten Druckes oder des Druckes bei Förderstromreduzierung und einem zweiten Erreichen des gleichen oder eines anderen vorgewählten Druckes nach der Förderstromreduzierung oder der Spritzkolbenhub zum Zeitpunkt der Förderstromreduzierung erfaßt wird. Weiterhin wird die Änderung des Spritzkolbenhubes bis zum Erreichen eines vorgewählten Druckes oder des Druckes vor Beginn der Förderstromreduzierung oder der Betrag der Druckdifferenz zwischen dem maximalen Druck bei Förderstromreduzierung und dem minimalen Druck nach der Förderstromreduzierung erfaßt und als Vergleichsgröße für die Regelung, Steuerung und/oder Überwachung verwendet. Nachteilig bei diesem Verfahren ist, daß bei Werkzeugen mit geringem Fließwiderstand eine geringe Spritzkraftänderung oder eine Änderung des Spritzkraftbedarfes zu einer erheblichen Verschiebung des Umschaltwertes von Spritzen auf Nachdrücken in Richtung der noch nicht vollständigen Werkzeugfüllung führt.

Bei warmem Vorkammeranguß, Heißkanalanguß und sehr engen Anschnitten kann ein Wechsel des Umschaltwertes vor vollständiger Werkzeugfüllung zu einer Kraftspitze bei der Durchspritzung des Angusses, der teilweise versiegeln kann, führen. In diesem Falle ist das Verfahren nach EP 0233548 A2 nur als Einrichthilfe und Steuerung der Druckhöhe bei einer hydraulischen Druckumschaltung, nicht aber zur Prozeßregelung geeignet.

Zu geringe Auflösegenauigkeit des Spritzdruckes und zu starke Beeinflussung des Kraftbedarfes bei der Werkzeugfüllung bei Parameterschwankungen, Plastrohstoffeinflüssen und Änderungen der Umgebungsbedingungen können Schwankungen in der Formteilqualität verursachen.

Es treten teilweise erhebliche Schwankungen im Druckbedarf für den Werkzeugfüllvorgang von Spritzung zu Spritzung auf und der erforderliche Änderungsbetrag des der Umschaltschwelle entsprechenden Drucksollwertes ist so groß, daß bei den vorgesehenen Umschaltmöglichkeiten in Abhängigkeit vom Spritzdruck für bestimmte Werkzeuge und Maschineneinsatzbedingungen ein erhebliches Vorverlegen des Umschaltwertes vor den eigentlichen volumetrischen Füllpunkt während der Regelung des Umschaltwertes möglich ist.

Schließlich werden alle Veränderungen des Umschaltwertes auch erst beim nächsten Spritzzyklus wirksam.

Hier will die Erfindung Abhilfe schaffen. Die Erfindung, wie sie in den Ansprüchen gekennzeichnet ist, löst die Aufgabe, eine Veränderung des Umschaltwertes auf Nachdruck im ablaufenden Spritzzyklus wirksam werden zu lassen, ohne daß es dabei zu einer Störung im Kompressionsaufbau im Formhohlraum kommt.

Die durch die Erfindung erreichten Vorteile sind im wesentlichen darin zu sehen, daß der minimale Leistungsbedarf einfach und schnell durch eine Messung elektrischer Größen, Spannung und/oder Strom, Druckdifferenz oder Weg erfaßbar und in der elektrischen Steuerung zur Ausgabe des Umschaltsignales auf die Nachdruckphase nutzbar ist, wodurch eine direkte prozeßadaptive Umschaltung möglich wird. Verwendet wird hierbei der Effekt, daß bei Spritzkraftbegrenzung eine Fortsetzung des Formfüllvorganges nach vollzogenem Druckausgleich zwischen dem Masseraum vor dem die Masse in den Formhohlraum verdrängenden Kolben und dem Formhohlraum nicht möglich ist und daß damit der Leistungsbedarf am die Formmasse verdrängenden Kolben erheblich sinkt.

Bei Spritzkraftbegrenzung tritt nach vollständiger Werkzeugfüllung und Kompression quasi ein Stillstand des die Formmasse in den Formenhohlraum verdrängenden Kolbens ein. Dieser Zeitpunkt wird vom erfindungsgemäßen Verfahren über die Leistungsmessung ermittelt und zur Umschaltung auf Nachdruck verwendet.

Damit erfolgt eine adaptive one-line-Bestimmung des richtigen Umschaltwertes, die eine sehr geringe Schwankungsbreite des Formeninnendruckes garantiert.
Nachfolgend wird die Erfindung an ein Ausführungsbeispiel darstellende Zeichnungen näher erläutert.

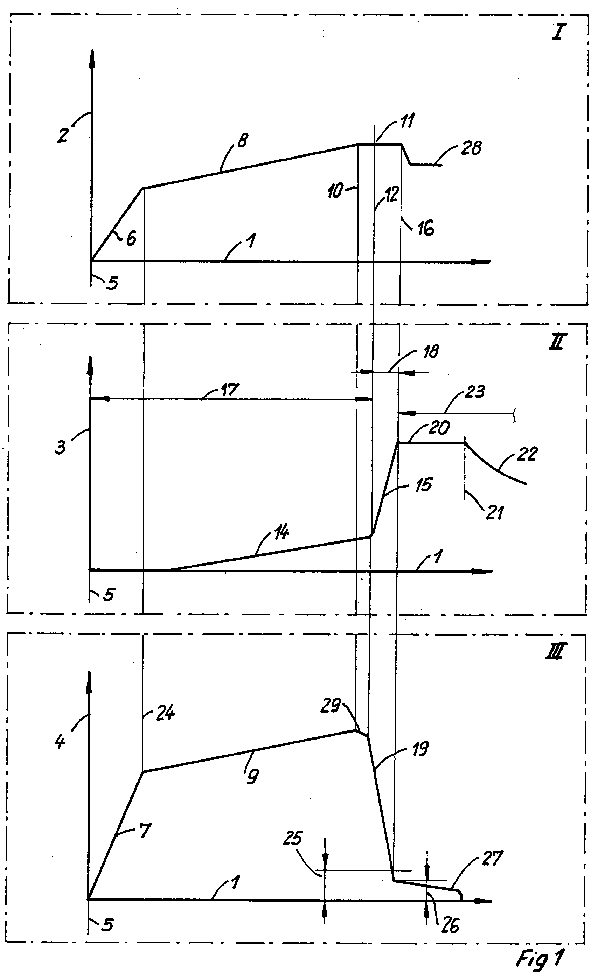

- Fig. 1: zeigt die Diagramme I, II und III, wobei über der Zeitachse 1
in I die Spritzkraftachse 2,
in II die Werkzeuginnendruckachse 3 und
in III die Achse 4 für den momentanen Leistungsbedarf des Werkzeugfüllvorganges aufgetragen sind.
- Fig. 2: zeigt die Schaltung der hydraulischen Zuflußdrosselung des Spritzzylinders für die Verfahrensanwendung.
- Fig. 3: zeigt die Verfahrensanwendung für einen elektromechanischen Spritzkolbenantrieb.
- Fig. 4: zeigt die Verfahrensanwendung für einen druckgeregelten Druckstromerzeugerantrieb für den Spritzkolben.

Zum Zeitpunkt 5 wird der Einspritzvorgang zugeschaltet. Zuerst wird das Düsen-Anguß-System durchgespritzt, wodurch ein steiler Kraftanstieg 6 bei gleichzeitiger starker Leistungsbedarfszunahme 7 auftritt.
Im Anschluß daran ergibt sich ein füllbedingter Kraftanstieg 8 und eine füllbedingte Leistungsbedarfszunahme 9.

Zum Zeitpunkt 10 wird die Spritzkraftbegrenzung wirksam und es stellt sich eine konstante Kraft 11 ein.
Diese konstante Kraft 11 bewirkt, daß die Vorlaufgeschwindigkeit des die Formmasse in den Formhohlraum verdrängenden Kolbens geringfügig abnimmt und eine Leistungsbedarfsabnahme während der Füllung 29 auftritt, die im allgemeinen gering ist.

Zum Zeitpunkt 12 ist der Formhohlraum 13 volumetrisch gefüllt und es kommt im Werkzeuginnendruckverlauf 14 zur Kompression der Formmasse 15 bis zum Druckausgleich zwischen dem Druck im Masseraum vor dem die Formmasse in den Formhohlraum 13 verdrängenden Kolben und dem Werkzeuginnendruck zum Zeitpunkt 16.
Während dieser sich der Werkzeugfüllphase 17 anschließenden Kompressionsphase 18 kommt es zu einer starken Leistungsbedarfsabnahme 19 für die Werkzeugfüllung, denn die Vorlaufgeschwindigkeit des die Formmasse in den Formhohlraum 13 verdrängenden Kolbens wird stark verzögert und beträgt zum Zeitpunkt 16 einen sehr geringen Wert.

Am Ende der Kompressionsphase 18, zum Zeitpunkt 16, wird die Werkzeuginnendruckkonstanz 20 erreicht, die bis zum Zeitpunkt 21 des Versiegelns des Angusses oder Anschnittes anhalten soll.
Nach dem Zeitpunkt 21 des Versiegelns kommt es zu einer abkühlungsbedingten Werkzeuginnendruckabnahme 22.
Zum Zeitpunkt 16 wird auf die Nachdruckphase 23 umgeschaltet.

Nach diesem Zeitpunkt 16 erfolgt nur noch der Schwindungsausgleich im Werkzeug und es ist ein minimaler Leistungsbedarf für die Werkzeugfüllung erreicht.

Bei hydraulischen Maschinen mit druckabhängiger Ölstromregelung ist dieser Zeitpunkt 16 erreicht, wenn nur noch geringe über dem Ausgleich des Leckölstromes liegende Ölstromwerte geregelt werden. Diese geregelten ölstromwerte liegen im Spritzzylinder wesentlich unter den ölstromwerten bei der Werkzeugfüllung 17 nach dem Durchspritzen des Düsenangußsystems zum Zeitpunkt 24.

Bei der Anordnung eines hydraulischen Drosselgliedes vor dem Spritzzylinder verringert sich über dieses die Druckdifferenz auf einen sehr geringen Wert, im allgemeinen unter 1 bar. Die Druckdifferenz ist hierbei ein Maß für den Ölstrom.

Die elektrische Leistungsaufnahme von druckabhängig geregelten Pumpen geht zum Zeitpunkt 16 auf einen der bei Spritzkolbenstillstand erforderlichen Leistungsaufnahme nahekommenden Wert zurück.
Bei elektromechanischem Translationsantrieb des die Formmasse in den Formhohlraum 13 verdrängenden Kolbens wird im allgemeinen die Stromaufnahme des elektrischen Antriebsgliedes auf einen minimalen Wert gesenkt, da nur noch die Kraft gehalten werden muß.

Wie auf dem Diagramm III sichtbar ist, kommt es zum Zeitpunkt 16 zu einer Unstetigkeitsstelle im Leistungsbedarf für den Werkzeugfüllvorgang. Diese ist durch den nahezu eintretenden Stillstand des die Formmasse in den Formhohlraum 13 verdrängenden Kolbens verursacht.

Dieser sich durch eine geringfügig erhöhte Leerlaufleistung bei elektrischem Antrieb oder durch nahe dem Leerlaufölstrom bei druckabhängig arbeitenden Regelpumpen oder durch eine nahe Null liegende Druckdifferenz über ein in einem Abschnitt der Strecke vom hydraulischen Druckstromerzeuger bis zum Antrieb für die Vorlaufbewegung des die Formmasse verdrängenden Kolbens befindliches Drosselglied abbildenden minimalen Leistungsbedarf kennzeichnet den richtigen Umschaltpunkt auf Nachdruck.

Für die Umschaltung vom Einspritzen, bestehend aus Werkzeugfüllphase 17 und Kompressionsphase 18, auf die Nachdruckphase 23, wird ein Kontrollwert 25 für den minimalen Leistungsbedarf vorgegeben.
Dieser Kontrollwert 25 muß wesentlich, mindestens 30 Prozent, unter dem minimalen Wert der Leistungsbedarfsabnahme während der Füllung 29 liegen und muß mindestens 1 Prozent über dem Leistungsbedarf nach erreichter Kompression 26 liegen. Von Zyklus zu Zyklus wird der gleiche Kontrollwert 25 vorgegeben.
Im allgemeinen ergibt sich für diesen Kontrollwert 25 des Leistungsbedarfes infolge der Verwendung eines mechanischen, hydraulischen oder elektrischen Schwellwertschalters ein in der Maschinensteuerung enthaltener unveränderlicher Festwert. Der Leistungsbedarf während der Nachdruckphase 27 verändert sich entsprechend der Kraftvorgabe bei Nachdruck 28 und dem Abkühlverlauf.

Grundsätzliche Voraussetzung ist die Spritzkraftbegrenzung von bzw. in der Kompressionsphase.
Zur Bewertung wird jeweils nur der Leistungsbedarf verwendet, der der Formfüllung dient, bzw. zu diesem in unmittelbarem Zusammenhang steht.
Der Leistungsbedarf, der bei der Kraftbegrenzung als Verlustleistung auftritt, darf nicht im Kontrollwert 25 enthalten sein.
Für die Festlegung des Kontrollwertes 25 ist im allgemeinen ein relativ großer Bereich möglich.
Es kommt darauf an, immer gleiche reproduzierbare Druckverläufe zu erhalten.

Durch die Anwendung eines Kontrollwertes 25 für den minimalen Leistungsbedarf ist gewährleistet, daß die volumetrische Füllung vollzogen und die Kompression im Forminnenraum zum Zeitpunkt der Signalauslösung begonnen worden ist.
Infolge der Trägheiten der Strecke unter Einbeziehung der Schaltzeiten ist im allgemeinen gesichert, daß der Druckausgleich zwischen dem Druck im Masseraum und dem Forminnenraum zum Zeitpunkt der Aktivierung der Spritzdruck-Nachdruckumschaltung vollzogen ist.
Mit der Umschaltung auf Nachdruck kann ein frei wählbarer Druck vorgegeben werden.

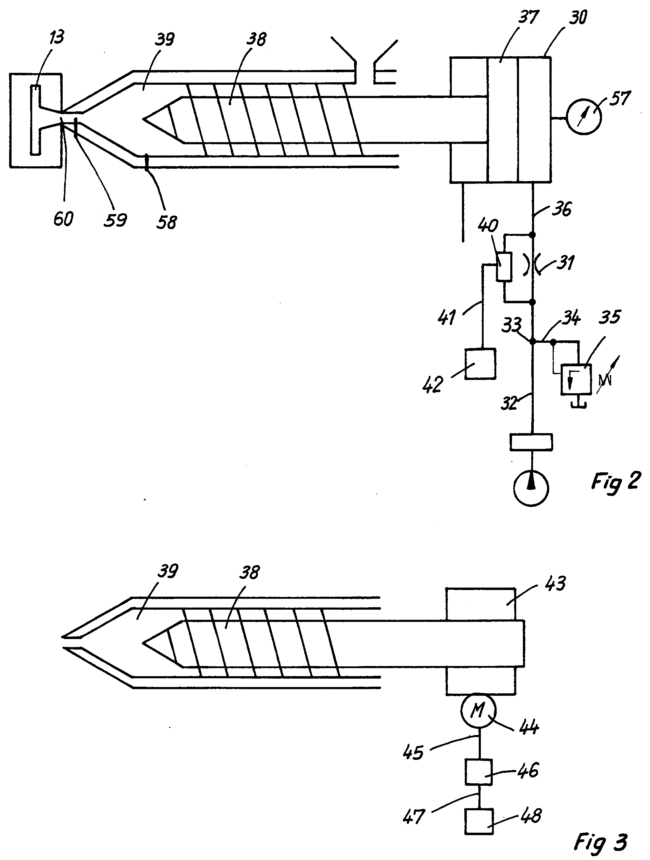

In Fig. 2 wird der dem Spritzzylinder 30 zufließende Ölstrom über ein Drosselglied 31 gesteuert.
In der hydraulischen Verbindung 32 zum Drosselglied 31 befindet sich ein Abzweig 33 mit einer hydraulischen Verbindung 34 zu einem Druckbegrenzungsventil 35.
Mit diesem Druckbegrenzungsventil 35 wird die Spritzkraftbegrenzung vorgegeben.

Durch den über das Drosselglied 31 und über die hydraulische Verbindung 36 dem Spritzzylinder 30 zugeführten Ölstrom wird der Spritzkolben 37 verschoben.
Dadurch wird durch den Kolben 38 Formmasse aus dem Masseraum 39 in den Formhohlraum 13 verdrängt.
Erhöht sich mit fortschreitender Füllung des Formhohlraumes 13 der Kraftbedarf zum Verschieben des Spritzkolbens 37, so spricht das Druckbegrenzungsventil 35 an.
Damit verringert sich der über das Drosselglied 31 fließende Ölstrom. Es wird durch eine geeignete Meßeinrichtung die Druckdifferenz wie über ein Druckdifferenzerfassungsglied 40 gemessen und über eine elektrische Verbindung 41 einer elektrischen Steuerung 42 zugeleitet. Abhängig von der Verringerung der Druckdifferenz über das Drosselglied 31 erfolgt die Umschaltung auf Nachdruck.
Da der Druck vor dem Drosselglied 31 durch das Druckbegrenzungsventil 35 konstant gehalten wird, ist mit der Druckdifferenzänderung über das Drosselglied 31 ein Maß für den Leistungsbedarf am Spritzzylinder 30 gegeben. Nach vollzogener Füllung des Formhohlraumes 13 und dem Druckausgleich zwischen dem Masseraum 39 und dem Formhohlraum 13 kommt die Bewegung des Spritzkolbens 37 zum Stillstand, wenn von einer geringen Bewegung zum Schwindungsausgleich bei der Abkühlung abgesehen wird.

Damit wird die Druckdifferenz über das Drosselglied 31 nahe Null sein, soweit die Drosselöffnungsweite des Drosselgliedes 31 erhalten bleibt. Diese Druckdifferenz des Drosselgliedes 31 kann mit einem lagekontrollierten, federbelasteten Kolben ermittelt werden.
Der Kontrollwert für die minimale Druckdifferenz wird über die elektrische Verbindung 41 der elektrischen Steuerung 42 zugeleitet, die ihrerseits das Signal der Nachdruckumschaltung, also die Vorgabe der Nachdruckzeit und des Drucksollwertes nach Erreichen der minimalen Druckdifferenz auslöst.

In Fig. 3 wird der Kolben 38 über ein mechanisches Translationsgetriebe 43, das mit einem elektrischen Antrieb 44 in Wirkverbindung steht, verschoben und mit der erforderlichen Spritzkraft belastet. Über eine elektrische Verbindung 45 werden die elektrischen Wirkungsgrößen, wie Spannung und/oder Strom, mit einer Meßeinrichtung 46 kontrolliert und mit ihnen der jeweilige Leistungsbedarf ermittelt.
Bei nahezu erreichtem Stillstand des Kolbens wird der elektrische Antrieb auf einen dem Leerlaufstrom und/oder der Leerlaufspannung entsprechenden Wert zur Beibehaltung der Spritzkraft geregelt.
Dieser von der Meßeinrichtung 46 erfaßte, dem bei vorgegebener Spritzkraft bei nahezu erreichten Stillstand des die Formmasse aus dem Masseraum 39 verdrängenden Kolben 38 entsprechende elektrische Wert schaltet über einen mit der Meßeinrichtung 46 in elektrischer Wirkverbindung über die elektrische Verbindung 47 stehenden Schwellwertschalter 48 von Spritzen auf Nachdruck.

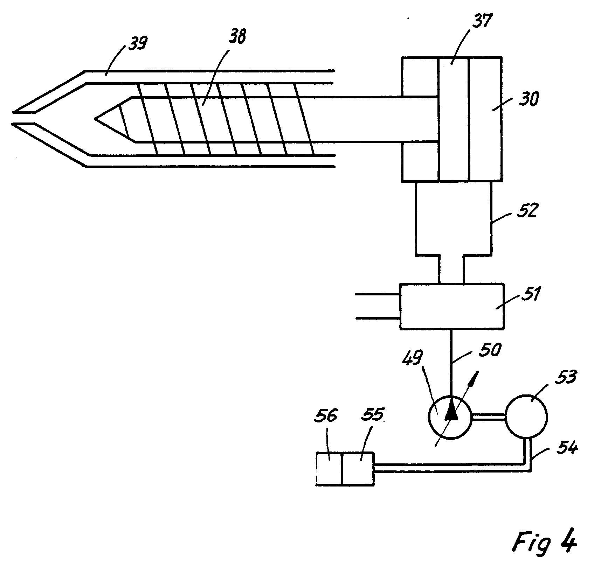

In Fig. 4 fördert der Druckstromerzeuger 49 über die hydraulische Verbindung 50, über den Steuerblock 51 und die hydraulische Verbindung 52 Druckmedium zum Spritzzylinder 30. Dieses Druckmedium verschiebt den Spritzkolben 37 und den mit ihm in translatorischer Richtung form- oder kraftschlüssig verbundenen, auf die Formmasse im Masseraum 39 wirkenden Kolben 38.

Bei Erreichen eines vorgegebenen Druckes verringert der Druckstromerzeuger 49 den Förderstrom auf den zum Erhalt dieses Druckes erforderlichen Wert.
Bei gleichbleibendem Druck und verringertem Förderstrom ändert sich die Leistungsaufnahme des Antriebsmotors 53.
Diese Leistungsaufnahme des Antriebsmotors 53 wird über die elektrische Verbindung 54 durch die Meßeinrichtung 55 erfaßt. Ist der Formhohlraum vollständig gefüllt und der Kompressionsausgleich zum Druck im Spritzzylinder 30 vollzogen, muß der Druckstromerzeuger nur noch den Druckstrom für den Leckstromausgleich und den Volumenausgleich auf Grund der Abkühlung im Formteil fördern.

Es wird nun geringfügig über der bei Spritzkolbenstillstand erforderlichen Leistungsaufnahme ein Kontrollwert 25 festgelegt. Bei dessen Erreichen schaltet ein mit der Meßeinrichtung 55 in Wirkverbindung befindlicher Schwellwertschalter 56 von Spritzen auf Nachdruck. Anstelle der in Fig. 4 dargestellten Messung der Motorleistung kann auch eine indirekte Förderstrommessung erfolgen.

Weiterhin kann eine Förderstrommessung, direkt oder indirekt, über ein im Ölstromzufluß des Spritzzylinders 30 angeordnetes druckregelndes Drossel- oder Druckminderventil erfolgen.

Weiterhin ist das Verfahren anwendbar bei der Messung der Kraftdifferenz (Fig. 2) zwischen der mit dem Meßwertgeber 57 auf die Fläche des Spritzkolbens 37 bezogenen Kraft und einem Meßwertgeber 58 oder 59 bezogen auf die Fläche des Spritzkolbens 37.
Auch eine Messung der Druckdifferenz zwischen dem Masseraum 39 und dem Düsenangußsystem 60 mit den Meßwertgebern 58 und 59 kann verwendet werden.
In beiden Fällen verringert sich die Differenz der Kraft bzw. des Druckes auf einen Minimalwert, der einer wesentlichen Verringerung der Differenz gegenüber der Füllphase 17 beispielsweise nach dem Durchspritzen des Düsen-Angußsystems zum Zeitpunkt 24 entspricht.

Das vorgeschlagene Verfahren verwendet den sich nach der vollständigen Werkzeugfüllung und der Kompression der Formmasse sehr stark verringerten Leistungsbedarf des Werkzeugfüllvorganges zum Umschalten auf Nachdruck.
Dabei wird, wie in den vier Antriebsvarianten gezeigt wurde, bei gleichbleibender Kraft, bzw. gleichbleibendem Druck ein elektrischer Wert, wie Strom oder Spannung oder von einem direkt oder indirekt gemessenen Druckmedienstrom als Maß des momentanen Leistungsbedarfes des Werkzeugfüllvorganges ausgegangen.

## Patentansprüche

1. Verfahren zur one-line-Bestimmung des Umschaltwertes auf Nachdruck beim Spritzgießen von Formteilen aus Kunststoff, Keramik, Metall oder Ähnlichem auf Spritzgießmaschinen, bei denen für die Formfüllphase eine Spritzkraftbegrenzung vorgegeben ist und bei denen die Vorlaufgeschwindigkeit des die Formmasse in den Formhohlraum verdrängenden Kolbens so gesteuert wird, daß die Spritzkraftbegrenzung eingehalten wird,
gekennzeichnet dadurch,
daß der Umschaltwert für den Nachdruck vom Leistungsbedarf für den Werkzeugfüllvorgang nach der Zuschaltung der Spritzkraftbegrenzung abgeleitet wird, dieser größer ist als der Leistungsbedarf bei stillstehendem kraftbelasteten Einspritzsystem, aber wesentlich kleiner ist als der Leistungsbedarf zu Beginn des Werkzeugfüllvorganges.

2. Verfahren nach Anspruch 1,
gekennzeichnet dadurch,
daß als Umschaltwert auf Nachdruck bei hydraulischen Antrieben eine sich nach dem Ansprechen der Spritzkraftbegrenzung spritzgeschwindigkeitsabhängig verringernde Druckdifferenz in einem Abschnitt der Strecke vom hydraulischen Druckstromerzeuger bis zum Antrieb für die Vorlaufbewegung des die Formmasse in den Formhohlraum (13) verdrängenden Kolbens (38) vorgegeben wird, die vorzugsweise kleiner 1 bar ist.

3. Verfahren nach Anspruch 1,
gekennzeichnet dadurch,
daß für den Umschaltwert auf Nachdruck der sich bei Spritzkraftbegrenzung verringernde Strom oder die Spannung eines kraftgeregelten elektromechanischen Linearantriebes verwendet wird und daß der Umschaltwert ein nahe der bei Spritzkolbenstillstand erforderlichen Leistungsaufnahme liegender Strom oder eine nahe der bei Spritzkolbenstillstand erforderlichen Leistungsaufnahme liegende Spannung ist.

4. Verfahren nach Anspruch 1,
gekennzeichnet dadurch,
daß für den Umschaltwert auf Nachdruck die sich bei Spritzkraftbegrenzung verringernde Leistungsaufnahme eines einen druckgeregelten Druckstromerzeuger antreibenden Elektromotors verwendet wird und daß dieser vorzugsweise die elektrische Leistungsaufnahme bei Leckstromausgleich ist.

5. Verfahren nach Anspruch 1,
gekennzeichnet dadurch,
daß für den Umschaltwert auf Nachdruck die sich bei Spritzkraftbegrenzung förderstromverringernde Lageänderung des Rotors eines druckgeregelten Druckstromerzeugers verwendet wird und daß diese Lage der des Leckstromausgleiches entspricht.

6. Verfahren nach Anspruch 1,
gekennzeichnet dadurch,
daß für den Umschaltpunkt auf Nachdruck der sich bei Spritzkraftbegrenzung auf einen vorgegebenen Minimalförderstrom, der vorzugsweise bei dem Leckstromausgleich liegt, verringernde, direkt oder indirekt gemessene, Förderstrom eines druckregelnden Drossel- oder Druckminderventils verwendet wird.

7. Verfahren nach Anspruch 1,
gekennzeichnet dadurch,
daß für den Umschaltwert auf Nachdruck eine sich in einem Abschnitt des Düsen-Angußsystems nach Ansprechen der Spritzkraftbegrenzung spritzgeschwindigkeitsabhängig verringernde Druckdifferenz verwendet wird, wobei die Druckdifferenz größer als der Druckdiffernzwert Null ist, aber wesentlich kleiner ist als der Druckdifferenzwert zu Beginn des Einspritzvorganges.
